(19)

Europäisches
Patentamt
European
Patent Office
Office européen
des brevets

(11)  **EP 1 764 736 A1**

(12)  **EUROPEAN PATENT APPLICATION**

(43) Date of publication:
**21.03.2007 Bulletin 2007/12**

(51) Int Cl.:
*G06T 3/40* (2006.01)     *G06T 11/60* (2006.01)

(21) Application number: **05291938.8**

(22) Date of filing: **19.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Le Meur, Olivier**
  **92648 Boulogne Cedex (FR)**

• **Guillotel, Philippe**
  **92648 Boulogne Cedex (FR)**
• **Haddad, Julien**
  **92648 Boulogne Cedex (FR)**

(74) Representative: **Benezeth, Philippe J.L. M.**
  **Thomson,**
  **46, Quai Alphonse Le Gallo**
  **92100 Boulogne Billancourt (FR)**

(54) **Method and device for image cropping**

(57)  The invention relates to a method for generating from a sequence of at least one source image, called source sequence, a sequence of at least one reduced image, called reduced sequence, the at least one reduced image having a size smaller or equal to the size of the at least one source image. The at least one reduced image is generated by extracting from the at least one source image at least one image part whose size and position depend on the perceptual interest of the pixels comprised in the at least one image part.

FIG. 1

EP 1 764 736 A1

**Description**

1. Field of the invention

The invention concerns a method and a device for generating, from a first sequence of images, called source sequence, a second sequence of images of reduced size, called reduced sequence, based on information characterizing the perceptual relevancy of pixels or groups of pixels within the images of the source sequence.

2. Background of the invention

The invention relates to the generation of a reduced sequence from a source sequence. Indeed, when browsing among a large amount of image sequences, it may be interesting to select a sequence at a glance. To this aim the generation of reduced sequences may be of interest. A reduced sequence is a sequence that has a smaller size than the source sequence from which it is generated. For example, in a context of sequence browsing, the selection of a sequence of images among various sequences may be eased and accelerated by displaying several reduced sequences on a given reproduction device (e.g. displaying a mosaic of reduced sequences on a TV set display). A classical method for generating a reduced sequence consists in down sampling the images of the source sequence. In this case, if the reduction of the size is too strong, the most important parts of the reduced sequence become very small which degrades the user viewing experience.

3. Summary of the invention

The invention aims at improving the user viewing experience by generating a reduced sequence by taking into account perceptual relevancy of pixels or groups of pixels, called regions hereinafter, within the images of the source sequence from which the reduced sequence is generated.

The invention relates to a method for generating from a sequence of at least one source image, called source sequence, a sequence of at least one reduced image, called reduced sequence, the at least one reduced image having a size smaller or equal to the size of the at least one source image characterized in that the at least one reduced image is generated by extracting (13) from the at least one source image at least one image part whose size and position depend on perceptual interest values of the pixels of the at least one source image.

According to a first embodiment, the extracted image part is delimited in the source image by an extraction window defined by the following steps of:

    a. positioning a preliminary window in the source image centered on the pixel of the source image with the highest perceptual interest, called current most conspicuous pixel;
    b. computing a current ratio between a perceptual interest value associated to the preliminary window and a perceptual interest value associated to the source image; and
    c. if the current ratio is lower than a first predefined threshold defining the extraction window by adapting the size of the preliminary window so that the perceptual interest value associated to the extraction window is higher than the perceptual interest value associated to the preliminary window else defining the extraction window by identifying the preliminary window with the extraction window.

Preferentially, if after the positioning step (a) the preliminary window is not fully included into the source image, the preliminary window is translated to be fully included into the source image.

Advantageously, if the current ratio is lower than a second predefined threshold, the computing step (b) is followed by the following steps of:

    •   identifying the pixel, called new most conspicuous pixel, of the source image with the highest perceptual interest value just lower than the perceptual interest value of the current most conspicuous pixel;
    •   repositioning the preliminary window in the source image centered on the new most conspicuous pixel; the new most conspicuous pixel becoming the current most conspicuous pixel;
    •   returning to step b;

Preferentially, if after the repositioning step the preliminary window is not fully included into the source image, the preliminary window is translated to be fully included into the source image.

According to a specific characteristic, the first predefined ratio is higher than the second predefined threshold.

Advantageously, the step (c) for defining the extraction window consists in the following four successive steps:

- initialize a window, called current window, with the preliminary window;
- increasing the height of the current window by a first increment and the width of the current window by a second increment;
- computing a new ratio between a perceptual interest value associated to the current window and a perceptual interest value associated to the source image, the current ratio becoming the previous ratio and the new ratio becoming the current ratio;
- if the difference between the current ratio and the previous ratio is lower than a third predefined threshold defining the extraction window by identifying the current window with the extraction window, else returning to the increasing step.

Preferentially, the step for defining the extraction window is further followed by the steps of:

- displacing the extraction window so that the displaced extraction window is centered on the perceptual relevancy gravity center of the extraction window; and
- translating the displaced extraction window so that the displaced extraction window is fully included into the source image.

Preferentially, the perceptual interest value associated to a window is the sum of perceptual interest values associated to each pixel comprised in the window and in that the perceptual interest value associated to an image is the sum of perceptual interest values associated to each pixel comprised in the image.

According to a second embodiment, the extracted image part is delimited in the source image by an extraction window defined by the following steps of:

- identifying, in the source image, pixels whose perceptual interest value is higher than a fourth predefined threshold; and
- defining the extraction window so that its top left corner is, among the identified pixels whose abscissa is the lowest, the pixel whose ordinate is the lowest and so that its bottom right corner is, among the identified pixels whose abscissa is the highest, the pixel whose ordinate is the highest.

According to another embodiment, the extracted image part is delimited in the source image by an extraction window defined by the following steps of:

a. positioning a current window in the source image centered on the pixel of the source image with the highest perceptual interest, called current most conspicuous pixel;
b. computing a current ratio between the sum of saliency values associated to each windows positioned in the source image and a perceptual interest value associated to the source image;
c. if the current ratio is lower than a fifth predefined threshold:

- identifying the pixel, called new most conspicuous pixel, of the source image with the highest perceptual interest value just lower than the perceptual interest value of the current most conspicuous pixel;
- positioning a new window in the source image centered on the new most conspicuous pixel, the new most conspicuous pixel becoming the current most conspicuous pixel and the new window becoming the current window;
- return to step b;
  else generating the extraction window by identifying the smaller window comprising all the positioned windows with the extraction window.

Preferentially, if after the positioning steps the current window is not fully included into the source image, the current window is translated to be fully included it into the source image.
The invention also relates to a method for generating a combined reduced sequence of several images, characterized in that a first reduced sequence of images is generated from a source sequence according to the invention and a second reduced sequence of images is generated by downsampling the source sequence, the combined reduced sequence being generated from the first reduced sequence of images by replacing a predefined number of consecutive images of the first reduced sequence by corresponding images of said second reduced sequence.

4. Drawings

Other features and advantages of the invention will appear with the following description of some of its embodiments, this description being made in connection with the drawings in which:

- Figure 1 depicts the general flowchart of the method according to the invention;
- Figure 2 depicts several positions of a window in the source image at different step of the method of the invention;
- Figure 3 depicts how a window is translated in order to be fully included in a source image (vertical positive translation);
- Figure 4 depicts how the window is translated in order to be fully included in a source image (vertical negative translation);
- Figure 5 depicts how a window is translated in order to be fully included in a source image (vertical and horizontal positive translation);
- Figure 6 depicts the evolution of a saliency ratio ;
- Figure 7 depicts generation of a reduced image from two windows ;

5. <u>Detailed description of the invention</u>

The invention relates to a method for generating a reduced sequence of images from a source sequence of images based on side information relating to the perceptual relevancy of pixels within the images of the source sequence. It may also be used for generating a single reduced image from a single source image. The side information may be provided by external means for example within data files. It may also be provided by the following method consisting in determining a perceptual relevancy value for each pixel in each image of the source sequence. The perceptual relevancy value associated to each pixel may be a saliency value. In this case, a saliency map is associated to each source image. A saliency map s is a two dimensional topographic representation of conspicuity of the image. This map is normalized for example between 0 and 255. The saliency map is thus providing a saliency value s(i,j) per pixel (where (i,j) denotes the pixel coordinates) that characterizes its perceptual relevancy. The higher the s(i,j) value is, the more relevant the pixel of coordinates (i,j) is. A saliency map for a given image may be obtained by the method described in EP 1 544 792 application and in the article by O. Le Meur et al. entitled "From low level perception to high level perception, a coherent approach for visual attention modeling" and published in the proceedings of SPIE Human Vision and Electronic Imaging IX (HVEI'04), San Jose, CA, (B. Rogowitz, T. N. Pappas Ed.), January 2004. The article by O. Le Meur et al. entitled "Performance assessment of a visual attention system entirely based on a human vision modeling" and published in the proceedings of ICIP in October 2004 explained also the saliency model. This method comprising the following steps :

- projection of the image according to the luminance component if the image is a single color image and according to the luminance component and to the chrominance components if the image is a color image;
- perceptual sub-bands decomposition of the projected components in the frequency domain according to a visibility threshold of a human eye; the sub-bands are obtained by carving up the frequency domain both in spatial radial frequency and orientation; each resulting sub-band may be regarded as the neural image corresponding to a population of visual cells tuned to a range of spatial frequency and a particular orientation;
- extraction of salient elements of the sub-bands related to the luminance component and related to the chrominance components, i.e. the most important information from the sub-band;
- contour enhancement of the salient elements in each sub-band related to the luminance and chrominance components;
- calculation of a saliency map for the luminance component from the enhanced contours of the salient elements of each sub-band related to the luminance component;
- calculation of a saliency map for each chrominance components from the enhanced contours of the salient elements of each sub-band related to the chrominance components;
- creation of the saliency map as a function of the saliency maps obtained for each sub-band.

For sake of clarity the steps of the method are described for a single source image but may be applied in parallel or successively on each image of a source sequence in order to generate a reduced sequence.
The following notations are used hereinafter:

- A source image, i.e. an image of the source sequence, has a size denoted by ($orig_{sx}$, $orig_{sy}$), where $orig_{sx}$ is the width and $orig_{sy}$ is the height of the image;

- $(red_{sx}^0, red_{sy}^0)$ is the smaller size of the images of the reduced sequence, where $red_{sx}^0$ is the width and $red_{sy}^0$ is the height of the reduced image; they may be selected by the user;

- $\left( red_{sx}^{iter_{\max}}, red_{sy}^{iter_{\max}} \right)$ is the larger size of the images of the reduced sequence where $red_{sx}^{iter_{\max}}$ is the width and $red_{sy}^{iter_{\max}}$ is the height of the reduced image; they may also be selected by the user;

- The saliency value associated to an image, an image part or a window is the sum of the saliency values associated to each pixel of the image, the image part or the window respectively.

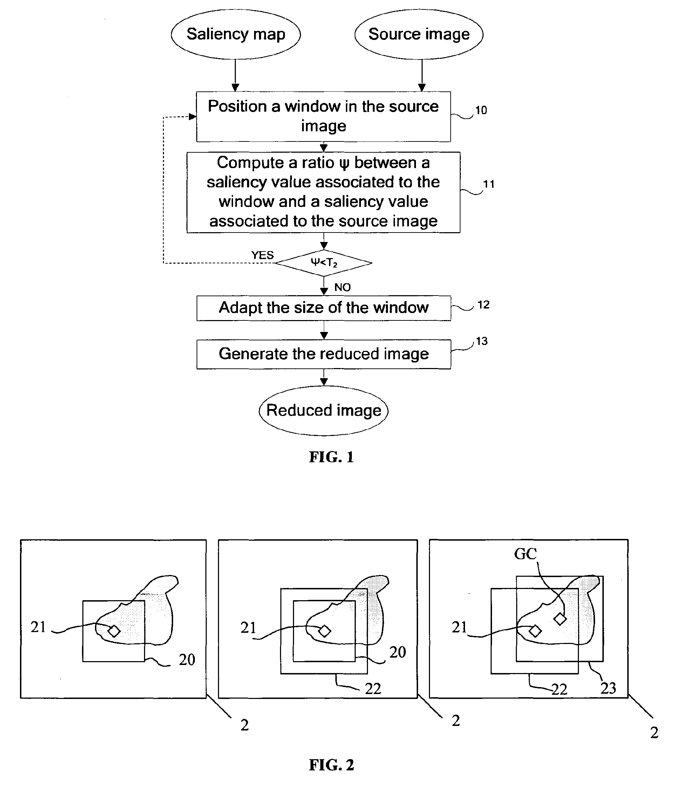

According to a first embodiment, the method comprises 4 steps referenced 10, 11, 12 and 13 on figure 1. In reference to figures 1 and 2, the step 10 comprises a first sub-step consisting in positioning a preliminary window 20 of size $\left( red_{sx}^{0}, red_{sy}^{0} \right)$ in the source image 2 centered on the pixel 21 of coordinates $i_{max}$ and $j_{max}$ whose saliency value within the source image 2 is the highest, i.e. the current most conspicuous pixel. This window delimits an image part in the source image 2. In the sequel, the words window and image part are equally used to designate the image part delimited by said window. Preferentially, the preliminary window 20 has to be positioned such that it is fully included in the source image 2. Thus the step 10 possibly comprises a second sub-step consisting in translating the preliminary window 20 in order that it is fully included in the source image 2. If $\left( i_{\max} - \dfrac{red_{sx}^{0}}{2} \right) >= 0$ and $\left( j_{\max} - \dfrac{red_{sy}^{0}}{2} \right) >= 0$, the preliminary window 20 is fully included in the source image 2 and it has not to be translated. The coordinates ($cor_x$, $cor_y$) of the top left corner of the window are computed as follows :

$$cor_x = i_{\max} - \frac{red_{sx}^{0}}{2}$$

$$cor_y = j_{\max} - \frac{red_{sy}^{0}}{2}$$

If the preliminary window 20 is not fully included in the source image 2, it has to be translated by a vector $\vec{T} = \begin{pmatrix} t_x \\ t_y \end{pmatrix}$ whose coordinates depend on the position of the pixel 21 of coordinates ($i_{max}, j_{max}$). In this case, the coordinates of the top left corner of the translated preliminary window 20 are computed as follows:

$$cor_x = i_{\max} - \frac{red_{sx}^{0}}{2} + t_x$$

$$cor_y = j_{\max} - \frac{red_{sy}^{0}}{2} + t_y$$

Depending on the values of $i_{max}$ and $j_{max}$ several cases occur. If the preliminary window 20 is out of the limits of the source image 2 in one direction, either horizontal or vertical direction, then:

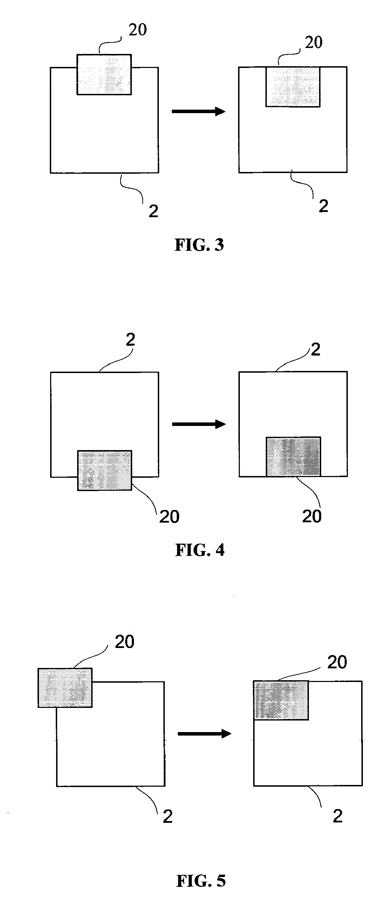

- if $\left( j_{\max} - \dfrac{red_{sy}^{0}}{2} \right) < 0$ as depicted on figure 3, then $\vec{T} = \begin{pmatrix} t_x \\ t_y \end{pmatrix} = \begin{pmatrix} 0 \\ \dfrac{red_{sy}^{0}}{2} - j_{\max} \end{pmatrix}$;

this corresponds to a positive vertical translation of the window.

- if $(j_{max} + \dfrac{red^0_{sy}}{2}) > orig_{sy}$ as depicted on figure 4, then $\vec{T} = \begin{pmatrix} t_x \\ t_y \end{pmatrix} = \begin{pmatrix} 0 \\ orig_{sy} - \dfrac{red^0_{sy}}{2} - j_{max} \end{pmatrix}$; this corresponds to a negative vertical translation of the window.

- if $(i_{max} - \dfrac{red^0_{sx}}{2}) < 0$, then $\vec{T} = \begin{pmatrix} t_x \\ t_y \end{pmatrix} = \begin{pmatrix} \dfrac{red^0_{sx}}{2} - i_{max} \\ 0 \end{pmatrix}$; this corresponds to a positive horizontal translation of the window.

- if $(i_{max} + \dfrac{red^0_{sx}}{2}) > orig_{sx}$, then $\vec{T} = \begin{pmatrix} t_x \\ t_y \end{pmatrix} = \begin{pmatrix} orig_{sx} - \dfrac{red^0_{sx}}{2} - i_{max} \\ 0 \end{pmatrix}$; this corresponds to a negative horizontal translation.

If the preliminary window 20 is out of the limits of the source image 2 in both horizontal and vertical directions then:

- if $(j_{max} - \dfrac{red^0_{sy}}{2}) < 0$ and $(i_{max} - \dfrac{red^0_{sx}}{2}) < 0$ as depicted on figure 5, then $\vec{T} = \begin{pmatrix} t_x \\ t_y \end{pmatrix} = \begin{pmatrix} \dfrac{red^0_{sx}}{2} - i_{max} \\ \dfrac{red^0_{sy}}{2} - j_{max} \end{pmatrix}$.

- if $(j_{max} + \dfrac{red^0_{sy}}{2}) > orig_{sy}$ and $(i_{max} + \dfrac{red^0_{sx}}{2}) > orig_{sx}$, then

$$\vec{T} = \begin{pmatrix} t_x \\ t_y \end{pmatrix} = \begin{pmatrix} orig_{sx} - \dfrac{red^0_{sx}}{2} - i_{max} \\ orig_{sy} - \dfrac{red^0_{sy}}{2} - j_{max} \end{pmatrix}$$; it is a vertical and horizontal negative translation.

- if $(j_{max} - \dfrac{red^0_{sy}}{2}) < 0$ and $(i_{max} + \dfrac{red^0_{sx}}{2}) > orig_{sx}$, then $\vec{T} = \begin{pmatrix} t_x \\ t_y \end{pmatrix} = \begin{pmatrix} orig_{sx} - \dfrac{red^0_{sx}}{2} - i_{max} \\ \dfrac{red^0_{sy}}{2} - j_{max} \end{pmatrix}$.

- if $(j_{max} + \dfrac{red^0_{sy}}{2}) > orig_{sy}$ and $(i_{max} - \dfrac{red^0_{sx}}{2}) < 0$, then

$$\vec{T} = \begin{pmatrix} t_x \\ t_y \end{pmatrix} = \begin{pmatrix} \dfrac{red^0_{sx}}{2} - i_{max} \\ orig_{sy} - \dfrac{red^0_{sy}}{2} - j_{max} \end{pmatrix}$$.

The translating sub-step may be avoided by taking into account only the part of the window 20 that is included into the source image. In this case the following steps 11, 12, 13 are applied on this part instead of on the whole preliminary window 20.

The step 11 consists in first computing a saliency value associated to the preliminary window 20, possibly translated, denoted by $SM_{reduced}$. In order to estimate the perceptual interest of the preliminary window 20, $SM_{reduced}$ is compared to the saliency value $SM_{image}$ associated to the source image 2 $\left( SM_{source} = \sum_{i=0}^{orig_{sx}-1} \sum_{j=0}^{orig_{sy}-1} s(i,j) \right)$ by

computing the ratio $\Psi = \dfrac{SM_{reduced}}{SM_{image}}$. According to a preferred embodiment, if the ratio $\Psi$ is close to 0, i.e. if $\Psi$ is lower than a second predefined threshold referenced $T_2$ on figure 1 (e.g. if $\Psi < 0.2$), then the most conspicuous pixel 21 is probably an aberrant or impulsive point since the preliminary window 20 does not include any sufficiently salient region. Consequently, the pixel with the highest saliency value just inferior to the saliency value associated to the current most conspicuous pixel 21 is identified. The new most conspicuous pixel becoming the current most conspicuous pixel, the steps 10 and 11 are applied again with it. If $\Psi$ is higher than the second predefined threshold, then the step 12 is applied directly.

The step 12 consists in dynamically adapting the size of the preliminary window 20 to the image content by an iterative approach in order to generate an extraction window referenced 22 on figure 2. Indeed, the size of the regions of high perceptual interest may vary from one image to another (e.g. in the case of a zoom or several regions of interest within the image). This adaptation is driven by the value $\Psi$ computed at step 11. If $\Psi$ is close to 1, if $\Psi$ is higher than a first predefined threshold (e.g. if $\Psi \geq 0.8$) then the size of the preliminary window 20 is not adapted since the saliency value associated to the preliminary window 20 is high enough. In this case, the extraction window 22 is set equal to the preliminary window 20, i.e. the extraction window 22 is defined by identifying the preliminary window 20 with the extraction window 22. If $\Psi$ is not close to 1, if $\Psi$ is lower than the first predefined threshold, then the size of the preliminary window 20 is iteratively increased. First, a window, called current window, is defined (i.e. initialized) by identifying the preliminary window 20 with the current window. At iteration k, the size of the current window is increased from $\left( red_{sx}^{k-1}, red_{sy}^{k-1} \right)$ to $\left( red_{sx}^{k}, red_{sy}^{k} \right)$ as specified below:

$$\begin{cases} red_{sx}^{k} = red_{sx}^{k-1} + \delta_x \\ red_{sy}^{k} = red_{sy}^{k-1} + \delta_y \end{cases}$$

where:

- $\delta_x$ and $\delta_y$ are arbitrarily set values; and
- $k$ is an integer number which represents the number of iterations.

The size of the current window is increased until $k > iter_{max}$ or until $\Delta\Psi^k \leq \varepsilon$, where $\varepsilon$ is a third predefined threshold which is arbitrarily set (e.g. $\varepsilon = 10^{-3}$). The size of the extraction window 22 equals the size computed at the last iteration, i.e. the extraction window 22 is defined by identifying the lastly defined current window with the extraction window 22. Preferentially, $\delta_x$ and $\delta_y$ are multiple of 2 in order to ease the determination of the up/down sampling filters when the reduced sequence has to be displayed on a reproduction device whose size is a multiple of 2.

The step 13 consists in generating the reduced image by extracting the image part of the source image delimited by the extraction window 22. The first pixel of the reduced image corresponds to the top left pixel of the extraction window 22.

According to a preferred embodiment, the step 12 is followed by a step 12' which consists in displacing the extraction window 22, also called $W_E$ in the sequel, to a new position in order to generate a displaced extraction window 23. This is achieved by computing the gravity center GC of the extraction window 22. The coefficients associated to the pixels in order to compute the gravity center are the perceptual interest values of the pixels (e.g. saliency values). Therefore the coordinates $(i_{GC}, j_{GC})$ of the gravity center GC are computed as follows:

$$i_{GC} = \frac{\sum_{p \in W_E} s(i_p, j_p) * i_p}{\sum_{p \in W_E} s(i_p, j_p)} \quad \text{and} \quad j_{GC} = \frac{\sum_{p \in W_E} s(i_p, j_p) * j_p}{\sum_{p \in W_E} s(i_p, j_p)},$$

where:

- $(i_p, j_p)$ are the coordinates of a pixel p of the extraction window $W_E$; and
- $s(i_p, j_p)$ is the perceptual relevancy value (e.g. saliency value) associated to the pixel p.

The extraction window 22 is thus displaced to a new position so that its center is located at the gravity center position GC. In order to ensure that the displaced extraction window 23 is fully included in the source image 2, the displaced extraction window 23 is possibly translated according to the second sub-step of step 10.

In the case of a source sequence of at least two images, the step 10 is advantageously modified such that the center of the window of size $(red_{sx}^0, red_{sy}^0)$ in the current source image 2 is positioned on a pixel of coordinates $I_{max}^{cur}$ and $J_{max}^{cur}$ which may be different from the most conspicuous pixel 21. $I_{max}^{cur}$ and $J_{max}^{cur}$ are calculated in order to ensure a temporal coherency of the sequence by avoiding that the spatial location of the preliminary window 20 in the source image drastically changes from one source image to the next source image. To this aim, the displacement d between two most conspicuous pixels (i.e. pixels of highest saliency values) in two consecutive source images is computed by the following formula:

$$d = \sqrt{(i_{max}^{cur} - i_{max}^{prev})^2 + (j_{max}^{cur} - j_{max}^{prev})^2}$$

where:

- $(i_{max}^{cur}, j_{max}^{cur})$ are the coordinates of the most conspicuous pixel in the current source image; and

- $(i_{max}^{prev}, j_{max}^{prev})$ are the coordinates of the most conspicuous pixel in the previous source image preceding the current source image.

In order to avoid wavering, for a small displacement d between the two most conspicuous pixels, the center of the preliminary window 20 is positioned in the current source image on the pixel whose coordinates equals the coordinates of the most conspicuous pixel in the previous source image. Thus if $d \leq ThStill$, the values of $I_{max}^{cur}$ and $J_{max}^{cur}$ are set equal to $i_{max}^{prev}$ and $j_{max}^{prev}$. A value of 7 for *ThStill* seems to be adapted. *ThStill* may also depend on the size of the window.

For a large displacement, i.e. if *d>ThMove,* the temporal coherency is threatened. The value *ThMove* depends on the size of the preliminary window 20. For example, the value is equal to the diagonal of the preliminary window 20, e.g.

$ThMove = \sqrt{(red_{sx}^0)^2 + (red_{sy}^0)^2}$. Therefore, the center of the preliminary window 20 is positioned in the current source image on the pixel of coordinates $I_{max}^{cur}$ and $J_{max}^{cur}$ computed as follows:

$$I_{max}^{cur} = i_{max}^{prev} + \frac{i_{max}^{cur} - i_{max}^{prev}}{2},$$

and

$$J_{\max}^{cur} = j_{\max}^{prev} + \frac{j_{\max}^{cur} - j_{\max}^{prev}}{2}$$

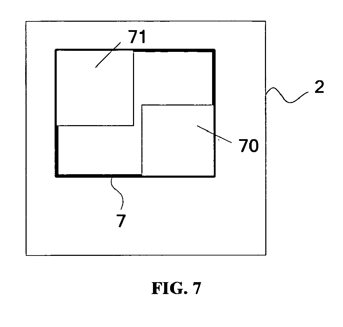

According to a preferred embodiment, more than one window is used to generate the reduced image. In this case, the steps 10, 11, 12 and 13 are replaced by the following steps. In referenced to figure 7, a first window 70 is positioned in the source image 2 so that its center is located on the first most conspicuous pixel of the source image 2, i.e. whose saliency value within the source image 2 is the highest. The saliency value $SM_{reduced\_70}$ associated to the first window 70 and the saliency value $SM_{image}$ associated to the source image 2 are computed. If the ratio

$$\Psi_0 = \frac{SM_{reduced\_70}}{SM_{image}}$$ is close to 1, i.e. higher than a fifth predefined threshold (e.g. if $\Psi_0 \geq 0.8$), then the reduced image is generated by extracting the image part of the source image 2 which is delimited by the first window 70. If $\Psi$ is not close to 1, i.e. lower than the fifth predefined threshold, a second window 71 is positioned in the source image 2 so that its center is located on the second most conspicuous pixel of the source image 2, i.e. the most conspicuous pixel of the source image 2 whose saliency value is just lower than the saliency value of the first most conspicuous pixel. The saliency value $SM_{reduced\_71}$ associated to the second window 71 is computed. If the ratio between

$$\Psi_1 = \frac{SM_{reduced\_70} + SM_{reduced\_71}}{SM_{image}}$$ is close to 1 then the image part extracted from the source image 2 to generate the reduced image corresponds to the smaller window 7 that comprises the first and the second windows 70 and 71. If the ratio $\Psi_1$ is not close to 1 then a third window is positioned in the source image 2 so that its center is located on the third most conspicuous pixel of the source image 2, i.e. the most conspicuous pixel of the source image 2 whose saliency value is just lower than the saliency value of the second most conspicuous pixel. The ratio between the sum of the three saliency values associated to the three windows and the saliency value $SM_{image}$ is compared to 1. If it is close to 1, then the image part extracted from the source image 2 to generate the reduced image corresponds to the smaller window that comprises the three windows. If it is not close to 1 then the process of positioning new windows is repeated until the ratio between the sum of saliency values associated to each positioned window and $SM_{image}$ is close to 1. Thus, at each iteration k, a new window is positioned in the source image 2 so that its center is located on the most conspicuous pixel (k) whose saliency value is just lower than the saliency value of the previous most conspicuous pixel (k-1).
The reduced image is then generated by extracting the image part from the source image 2 delimited by the smaller window that comprises all the positioned windows. Preferentially before computing their saliency values, the windows are translated to be fully included into the source image and/or displaced according to step 12'.

According to another embodiment, steps 10, 11, and 12 are replaced by the following step which consists in positioning the extraction window 22 by identifying in the image source 2 the pixels whose saliency values are higher than a fourth predefined threshold. The extraction window 22 is thus defined by its top left corner and its bottom right corner. Among the identified pixels whose abscissa is the lowest, the pixel with the lowest ordinate is set as the top left corner of the extraction window 22. Among the identified pixels whose abscissa is the highest, the pixel with the highest ordinate is the bottom right corner of the extraction window 22.

The step 13 is then applied in order to generate the reduced image by extracting the image part of the source image delimited by the extraction window 22. The first pixel of the reduced image corresponds to the top left pixel of the extraction window 22.

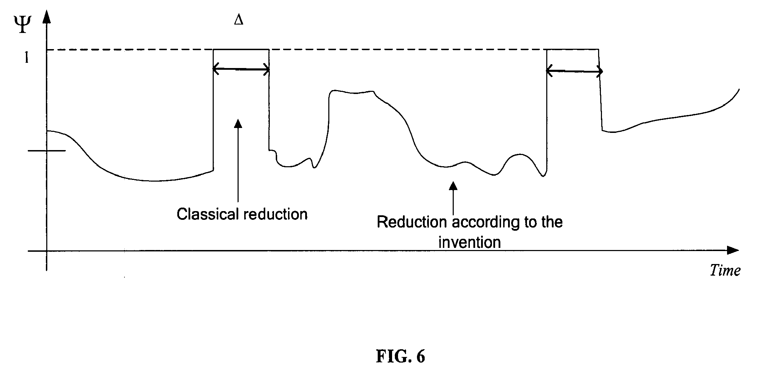

According to a specific embodiment, in the case of a source sequence of more than one image, the step 13 is advantageously followed by the following step which consists in generating a combined reduced sequence by switching between the reduced sequence according to the invention, called first reduced sequence, and the source sequence reduced according to a classical method, called second reduced sequence. A classical method refers to a method that simply downsamples the images of the source sequence to generate the reduced sequence. This combined reduced sequence should improve the viewer understanding of the scene by providing him with the global scene (e.g. downsampled version of the source images). The switching step is driven by the value of $\Psi$. To this aim the ratio $\Psi$ is computed for the current image. If the value $\Psi$ is not close to 1 the classically reduced video (i.e. the down sampled source images) is transmitted during $\Delta$ seconds as depicted on figure 6. The $\Delta$ value may be set by the users. This switching may also be automatically driven in order to give a global sketch of the scene by switching between both reduced sequences regularly for example every Δ seconds or for example by replacing every Δ seconds a given number of pictures of first reduced sequence by corresponding pictures of the second reduced sequence.

According to a particular embodiment, several regions of interest may be handled by dividing the reduced images into several (e.g. four sub-images) parts, each part containing either the source sequence or one of the most conspicuous regions (i.e. higher saliency values).
The parts corresponding to the most conspicuous regions are determined by the four following successive steps :

- Identifying the most conspicuous pixel in the source image which is not an inhibited pixel;

- Extracting from the image source an image part of size $\left(red_{sx}^{0}, red_{sy}^{0}\right)$ centered on the previous location;

- Inhibiting the most conspicuous pixel corresponding to the extracted image part;
- Returning to the identifying step until a predefined number of image parts have been extracted.

Obviously, the invention is not limited to the embodiments described above. The skilled person may combine all these embodiments. Information other than saliency values or saliency maps can be used as side information provided it characterizes the perceptual relevancy of pixels or groups of pixels.

Some of the advantages to build reduced sequence centered on the most important regions (i.e. in other words the advantage to drive the reduction by perceptual interest of regions within the images) are listed below:

- decrease the selection time (to ease the browsing),
- comprehend the sequence at a glance,
- give a reliable summary of the source sequence,
- allows the transmission of many sequence over restricted bandwidth channels without losing the most useful information.

The different embodiments may offer some of the advantages among those listed below:

- deal with the large amount of multimedia content (e.g. more than one region of high perceptual interest may be handled) by using an adaptive size computation of the reduced frame or by using more than one window;
- offer a simple way to reposition the reduced window in the source frame using the gravity center of the window;
- offer good temporal coherency;
- allows a global understanding of the scene is also necessary.

The method may be used for various applications such as sequence summary, browsing, sequence indexing. The invention may also be advantageously used for looking into image sequence on small displays (for example on a Personal Digital Assistant, on a cell phone, or an a digital camera).

**Claims**

1. Method for generating from a sequence of at least one source image, called source sequence, a sequence of at least one reduced image, called reduced sequence, said at least one reduced image having a size smaller or equal to the size of said at least one source image **characterized in that** said at least one reduced image is generated by extracting from said at least one source image at least one image part whose size and position depend on perceptual interest values of the pixels of said at least one source image.

2. Method according to claim 1, **characterized in that** said extracted image part is delimited in said source image by an extraction window (22) defined by the following steps of:

   a. positioning (10) a preliminary window (20) in said source image centered on the pixel of said source image with the highest perceptual interest, called current most conspicuous pixel;
   b. computing (11) a current ratio between a perceptual interest value associated to said preliminary window and a perceptual interest value associated to said source image; and
   c. if said current ratio is lower than a first predefined threshold defining the extraction window (22) by adapting (12) the size of said preliminary window (20) so that the perceptual interest value associated to said extraction window (22) is higher than the perceptual interest value associated to said preliminary window (20) else defining the extraction window (22) by identifying the preliminary window with the extraction window (22).

3. Method according to claim 2, **characterized in that**, if after the positioning step (a) said preliminary window (20) is not fully included into said source image, said preliminary window (20) is translated to be fully included into said source image.

4. Method according to claim 2 or 3, **characterized in that**, if said current ratio is lower than a second predefined threshold, the computing step (b) is followed by the steps of:

> • identifying the pixel, called new most conspicuous pixel, of said source image with the highest perceptual interest value just lower than the perceptual interest value of said current most conspicuous pixel;
> • repositioning said preliminary window in the source image centered on said new most conspicuous pixel, the new most conspicuous pixel becoming the current most conspicuous pixel;
> • returning to step b;

5. Method according to claim 4, **characterized in that**, if after the repositioning step said preliminary window (20) is not fully included into said source image, said preliminary window (20) is translated to be fully included into said source image.

6. Method according to claim 4 or 5, **characterized in that** the first predefined ratio is higher than the second predefined threshold.

7. Method according to any of claims 2 to 6, **characterized in that** the step (c) for defining the extraction window (22) consists in the following four successive steps:

> • initialize a window, called current window, with said preliminary window (20);
> • increasing (12) the height of the current window (20) by a first increment and the width of the current window (20) by a second increment;
> • computing a new ratio between a perceptual interest value associated to said current window and a perceptual interest value associated to said source image, the current ratio becoming the previous ratio and the new ratio becoming the current ratio;
> • if the difference between the current ratio and the previous ratio is lower than a third predefined threshold defining the extraction window (22) by identifying said current window with the extraction window (22), else returning to the increasing step (12).

8. Method according any of claims 2 to 7, **characterized in that** the step (c) for defining the extraction window (22) is further followed by the steps of:

> • displacing the extraction window (22) so that the displaced extraction window is centered on the perceptual relevancy gravity center of said extraction window (22);
> • translating said displaced extraction window (22) so that said displaced extraction window is fully included into said source image.

9. Method according to claim 8, **characterized in that** the perceptual relevancy gravity center coordinates $i_{GC}$ and $j_{GC}$ are computed as follows:

$$i_{GC} = \frac{\sum_{p \in W_E} s(i_p, j_p) * i_p}{\sum_{p \in W_E} s(i_p, j_p)} \text{ and } j_{GC} = \frac{\sum_{p \in W_E} s(i_p, j_p) * j_p}{\sum_{p \in W_E} s(i_p, j_p)} ;$$

where:

> - (ip,jp) are the coordinates of a pixel p of said extraction window $W_E$ (22);
> - s(ip,jp) is a perceptual relevancy value associated to the pixel p.

**10.** Method according to any of claims 2 to 9, **characterized in that** said perceptual interest value associated to a window is the sum of perceptual interest values associated to each pixel comprised in the window and **in that** said perceptual interest value associated to an image is the sum of perceptual interest values associated to each pixel comprised in said image.

**11.** Method according to claim 1, **characterized in that** said extracted image part is delimited in said source image by an extraction window defined by the following steps of:

• identifying, in said source image, pixels whose perceptual interest value is higher than a fourth predefined threshold; and
• defining the extraction window so that its top left corner is, among the identified pixels whose abscissa is the lowest, the pixel whose ordinate is the lowest and so that its bottom right corner is, among the identified pixels whose abscissa is the highest, the pixel whose ordinate is the highest.

**12.** Method according to claim 1, **characterized in that** said extracted image part is delimited in said source image by an extraction window defined by the following steps of:

a. positioning a current window in said source image centered on the pixel of said source image with the highest perceptual interest, called current most conspicuous pixel;
b. computing a current ratio between the sum of saliency values associated to each window positioned in said source image and a perceptual interest value associated to said source image;
c. if said current ratio is lower than a fifth predefined threshold:

• identifying the pixel, called new most conspicuous pixel, of said source image with the highest perceptual interest value just lower than the perceptual interest value of said current most conspicuous pixel;
• positioning a new window in the source image centered on said new most conspicuous pixel, the new most conspicuous pixel becoming the current most conspicuous pixel and the new window becoming the current window;
• return to step b; else defining said extraction window by identifying the smaller window comprising all said positioned windows with said extraction window.

**13.** Method according to claim 12, **characterized in that**, if after the positioning steps said current window is not fully included into said source image, said current window is translated to be fully included it into said source image.

**14.** Method according to any of claims 1 to 13, **characterized in that** a perceptual interest value is a saliency value.

**15.** Method for generating a combined reduced sequence of several images, **characterized in that** a first reduced sequence of images is generated from a source sequence according to the method of any of claims 1, 2, 11, or 12 and a second reduced sequence of images is generated by downsampling said source sequence, the combined reduced sequence being generated from the first reduced sequence of images by replacing a predefined number of consecutive images of said first reduced sequence by corresponding images of said second reduced sequence.

Saliency map          Source image

Position a window in the source
image                                            10

Compute a ratio ψ between a
saliency value associated to the
window and a saliency value                      11
associated to the source image

YES        ψ<T₂

NO

Adapt the size of the window                     12

Generate the reduced image                       13

Reduced image

**FIG. 1**

GC

21                    21                    21

20        22          20        22    23

2              2                    2

**FIG. 2**

**FIG. 3**

**FIG. 4**

**FIG. 5**

FIG. 6

**FIG. 7**

**European Patent Office**

**EUROPEAN SEARCH REPORT**

Application Number

EP 05 29 1938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUH BONGWON ET AL: "Automatic thumbnail cropping and its effectiveness" UIST PROC. ANNU. ACM SYMP. USER INTERFACE SOFTW. TECHNOL.; UIST: PROCEEDINGS OF THE ANNUAL ACM SYMPOSIUM ON USER INTERFACE SOFTAWARE AND TECHNOLOGY; UIST'03: PROCEEDINGS OF THE 16TH ANNUAL ACM SYMPOSIUM ON USER INTERFACE SOFTWARE AND TECHNOLOGY 2003, 2003, pages 95-104, XP002367824 * abstract * * page 96, left-hand column, last paragraph - page 98, left-hand column, line 11 * | 1-3,7, 10-15 | G06T3/40 G06T11/60 |
| X | CHIA-CHIANG HO ET AL: "A user-attention based focus detection framework and its applications" INFORMATION, COMMUNICATIONS AND SIGNAL PROCESSING, 2003 AND FOURTH PACIFIC RIM CONFERENCE ON MULTIMEDIA. PROCEEDINGS OF THE 2003 JOINT CONFERENCE OF THE FOURTH INTERNATIONAL CONFERENCE ON SINGAPORE 15-18 DEC. 2003, PISCATAWAY, NJ, USA,IEEE, vol. 3, 15 December 2003 (2003-12-15), pages 1315-1319, XP010702992 ISBN: 0-7803-8185-8 * abstract * * sections 2 and 3, pp. 1315-1318 * | 1,14,15 | |
| | ----- | | **TECHNICAL FIELDS SEARCHED (IPC)** |
| | -/-- | | G06T |

The present search report has been drawn up for all claims

| Place of search | Date of completion of the search | Examiner |
|---|---|---|
| Munich | 17 February 2006 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**EP 1 764 736 A1**

European Patent Office

**EUROPEAN SEARCH REPORT**

Application Number

EP 05 29 1938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN L-Q ET AL: "A VISUAL ATTENTION MODEL FOR ADAPTING IMAGES ON SMALL DISPLAYS" MULTIMEDIA SYSTEMS, ACM, NEW YORK, NY, US, vol. 9, no. 4, October 2003 (2003-10), pages 353-364, XP001196335 ISSN: 0942-4962 * page 354, right-hand column, line 31 - page 356, right-hand column, last line * * page 358, right-hand column, line 9 - page 361, left-hand column, line 4 * | 1,14,15 | |
| A,D | LE MEUR O ET AL: "From low-level perception to high-level perception: a coherent approach for visual attention modeling" PROCEEDINGS OF THE SPIE, SPIE, BELLINGHAM, VA, US, vol. 5292, no. 1, 2004, pages 284-295, XP002351539 ISSN: 0277-786X * abstract * *section 2, Figure 2-1 * | 1-15 | |
| A | ITTI L ET AL: "FEATURE COMBINATION STRATEGIES FOR SALIENCY-BASED VISUAL ATTENTION SYSTEMS" JOURNAL OF ELECTRONIC IMAGING, SPIE / IS & T, US, vol. 10, no. 1, January 2001 (2001-01), pages 161-169, XP001203934 ISSN: 1017-9909 * abstract * * section 2 * | 1-15 | TECHNICAL FIELDS SEARCHED (IPC) |

The present search report has been drawn up for all claims

| Place of search | Date of completion of the search | Examiner |
|---|---|---|
| Munich | 17 February 2006 | Zamuner, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1544792 A

**Non-patent literature cited in the description**

- **O. LE MEUR et al.** From low level perception to high level perception, a coherent approach for visual attention modeling. *proceedings of SPIE Human Vision and Electronic Imaging IX (HVEI'04,* January 2004

- **O. LE MEUR et al.** Performance assessment of a visual attention system entirely based on a human vision modeling. *proceedings of ICIP,* October 2004